# EUROPÄISCHE PATENTSCHRIFT

(11) **EP 0 463 292 B1**
(45) Veröffentlichungstag und Bekanntmachung des Hinweises auf die Patenterteilung: **08.12.1993**
(21) Anmeldenummer: 91103809.9
(22) Anmeldetag: 13.03.1991
(51) Int. Cl.: B01D 29/11, B01D 29/52, B01D 29/82

(54) **Verfahren zur Druckentwässerung von wässrigen Schlämmen**
Process for dehydrating aqueous sludges by way of pressure
Procédé pour la déshydratation sous pression de boues aqueuses

(30) Priorität: 27.06.1990 DE 4020405
(43) Veröffentlichungstag der Anmeldung: 02.01.1992
(73) Patentinhaber: Müller Umwelttechnik GmbH & Co. KG, 32810 Schieder-Schwalenberg (DE)
(72) Erfinder: Müller, Dipl.Ing Wolfang, W-4938 Schieder-Schwalenberg 2 (DE); Herzog, Dipl.Ing. Dirk, W-4920 Lemgo-Brake (DE)
(74) Vertreter: Stracke, Alexander, Dipl.-Ing.

(56) Entgegenhaltungen:
- EP-A- 0 269 813
- DE-A- 3 914 326
- DE-B- 1 486 812
- FR-A- 2 234 913

## Beschreibung

Die Erfindung betrifft ein Verfahren gemäß dem Gattungsbegriff des Patentanspruches 1.

Es ist ein Verfahren dieser Art bekannt (DE-C-36 41 180), bei dem der Ausschubvorgang des entwässerten Schlammes von einem am Ausschubkolben angreifenden, ölhydraulisch betriebenen Teleskopzylinder ausgeführt wird.

Nachteilig an diesem Verfahren ist das Erfordernis einer großen schweren Hydraulikanlage, die nicht nur Platz kostet und zusätzliches Gewicht bedeutet, was sich besonders bei mobilem Einsatz ungünstig auswirkt, sondern die auch ständiger Wartung bedarf. Außerdem ist der Ausschub, währenddessen keine weitere Schlammentwässerung stattfindet, unwirtschaftlich.

Die Aufgabe der Erfindung besteht darin, das oben angegebene Verfahren zur Druckentwässerung von wässrigen Schlämmen dahingehend abzuändern, daß bei jedem Ausschubhub des Ausschubkolbens eine Rohschlammvorentwässerung stattfindet und auf einen aufwendigen ölhydraulischen Kolbenantrieb zum Ausschieben des entwässerten Schlammes verzichtet werden kann.

Die Lösung dieser Aufgabe wird erfindungsgemäß durch die Merkmale des kennzeichnenden Teils des Patentanspruches 1 gelöst.

Von besonderem Vorteil ist hierbei, daß als Arbeitsmedium zum Verschieben des Ausschubkolbens von der Anschlagstellung in die Entleerungsstellung der zu entwässernde Rohschlamm selbst eingesetzt wird und somit die zusätzliche ölhydraulische Anlage gänzlich überflüssig wird, da auch die Bewegung des Ausschubkolbens von der Entleerungsstellung in die Anschlagstellung wie in dem vorbekannten Verfahren von dem unter einer Förderpumpe erzeugten Druck geförderten Schlamm hervorgerufen wird.

Weitere vorteilhafte Ausgestaltungen der Erfindung ergeben sich aus den Unteransprüchen.

Bei einer bevorzugten Ausführungsform der Erfindung läuft das Verfahren mit einer Vorstufe in drei aufeinanderfolgenden Stufen ab, wobei in der ersten Stufe neuer Rohschlamm in den anschlagseitigen Filterraum gepreßt wird, der den in der Vorstufe im deckelseitigen Filterraum entwässerten Schlamm bei noch verschlossenem Deckel nachentwässert.

In der zweiten Stufe wird nach kurzzeitig abgesenktem Pumpendruck und Öffnung des Deckels weiterer Rohschlamm in den anschlagseitigen Filterraum gepreßt, der den Ausschubkolben von der Anschlagstellung oder einer beliebigen anderen Stellung in die Entleerungsstellung bewegt und den nachentwässerten Schlamm in Form eines stichfesten Schlammkuchens aus dem deckelseitigen Filterraum ausschiebt, wobei der als Arbeitsmedium dienende Rohschlamm gleichzeitig vorentwässert wird.

In der dritten Stufe wird der vorentwässerte Schlamm aus dem anschlagseitigen in den deckelseitigen Filterraum umgepumpt, wobei der Arbeitskolben zunächst wieder von der Entleerungsstellung in die Anschlagstellung bewegt wird und der vorentwässerte Schlamm danach zur vollständigen Entwässerung über einen Zeitraum von ca. 15 Minuten mit einem Druck bis zu 20 bar beaufschlagt wird. Anschließend wird neuer Rohschlamm in den anschlagseitigen Filterraum gepreßt und das Entwässerungsverfahren wiederholt sich mit der ersten Verfahrensstufe.

Nachfolgend wird die Erfindung anhand von Zeichnungen zweier Ausführungsbeispiele von Vorrichtungen zur Durchführung des Verfahrens näher beschrieben.

Es zeigen:
Fig. 1 -
4 Vorrichtung zur Durchführung des dreistufigen Verfahrens in verschiedenen Verfahrensabschnitten,
5 Vorrichtung zur Durchführung des Verfahrens mit zwei durch Deckel verschließbare Entleerungsöffnungen.

Das Verfahren zur Druckentwässerung von wässrigen Schlämmen wird mit einer Vorstufe in Betrieb genommen, bei der der deckelseitige Filterraum 19' bei geöffnetem Ventil 1 mittels einer Pumpe 15 mit Rohschlamm 10 gefüllt wird, der Ausschubkolben 7' dabei in die Anschlagstellung 8' verfahren, der Rohschlamm 10 währenddessen vorentwässert, sodann über eine vorgebbare Haltezeit dem Arbeitsdruck ausgesetzt entwässert wird, und zur Einleitung der ersten Stufe das Ventil 1 geschlossen wird und ohne die Pumpenleistung zu vermindern die in Umpumpleitungen angeordnete Ventile 2 und 4 geöffnet werden, wobei das Ventil 4 nur kurzzeitig geöffnet wird, um nichtentwässerte Rohschlammreste 10 aus dem Deckel 13' und den Förderleitungen 16 über die Saugseite 17 der Pumpe 15 abzupumpen.

In der ersten Verfahrensstufe wird über das geöffnete Ventil 2 unter Beibehaltung des Arbeitsdruckes der Pumpe 15 neuer Rohschlamm 10, der als Arbeitsmedium für den Ausschubkolben 7' dient, auf dessen Anschlagseite 11 gepumpt, wobei der im deckelseitigen Filterraum 19' befindliche, in der Vorstufe oder einem vorangegangenen Zyklus entwässerte Schlamm zusätzlich nachentwässert, und der Rohschlamm 10 dabei selbst vorentwässert. Nach Beendigung dieses Vorgangs wird zur Einleitung der zweiten Verfahrensstufe der Pumpendruck kurzzeitig abgesenkt und der Deckel 13' geöffnet.

In der zweiten Verfahrensstufe gelangt weiterer Rohschlamm 10 über das offene Ventil 2, die Ventile 1,3 und 4 sind geschlossen, sowie über den entsprechenden Förderleitungen 16 auf die Anschlagseite 11 des Ausschubkolbens 7', der dabei in die Entleerungsstellung 9' verschoben wird und dabei den nachentwässerten Schlamm in Form eines stichfesten Schlammkuchens aus dem deckelseitigen Filterraum 19' ausschiebt. Nach Beendigung des Ausschubvorganges und Verschließen des Deckels 13' sowie des Ventiles 2 wird zur Einleitung der dritten Stufe der vorentwässerte Schlamm 12 über das geöffnete Ventil 3 von der Saugseite 17 der als Exzenterschneckenpumpe ausgeführten Förderpumpe 15 angesaugt und über deren Druckseite 18 über das geöffnete Ventil 1 in den deckelseitigen Filterraum 19' gedrückt. Der Ausschubkolben 7' treibt durch diese Druckbeaufschlagung des Ausschubkolbens 7' den vorentwässerten Schlamm 12 aus dem anschlagseitigen Filterraum 20' heraus, bis der Kolben 7' wieder die Anschlagstellung 8' erreicht hat. Der vorentwässerte Schlamm 12 wird sodann über einen vorbestimmbaren Zeitraum von ca. 15 Minuten mit einem Arbeitsdruck von bis zu 20 bar beaufschlagt und dadurch vollständig entwässert.

Die nichtentwässerten Rohschlammreste 10 aus dem Deckel 13' und den Förderleitungen 16 werden bei geschlossenen Ventilen 1 und 3 über ein Ventil 4 der Saugseite 7' der Pumpe 15 zugeführt, so daß diese Reste gemeinsam mit neuem Rohschlamm 10 über das wieder geöffnete Ventil 2 auf die Anschlagseite 11 des Ausschubkolbens 7' eingespeist werden können, wonach sich der gesamte Vorgang mit der ersten Verfahrensstufe wiederholt.

Bei einem weiteren Verfahren zur Druckentwässerung von wässrigen Schlämmen besitzen die zylindrischen Filterräume 19'' und 20'' an jeder Stirnseite 22,23 mit Deckeln 13'' und 13''' verschließbare Entleerungsöffnungen mit benachbart angeordneten Anschlägen 21'' und 21''' für die Bewegungsbegrenzung des Ausschubkolbens 7'', der bei jedem Hub einen Ausschubhub ausführt und bei jedem Ausschubhub der als Antriebsmedium des Ausschubkolbens 7'' dienende Rohschlamm 10 vorentwässert wird. Die Deckel 13'' und 13''' werden zum abwechselnden Ausschieben des nachentwässerten Schlammes wechselseitig geöffnet.

Die Vorrichtung zur Durchführung beider Verfahren besitzen jeweils einen Ausschubkolben 7' und 7'', der in einem siebartig ausgebildeten Filterzylinder 27 gleitbar gelagert ist und zwischen dem und einem ihn umgebenden Außenzylinder 28 ein Ringraum 29 geringer Höhe besteht, aus dem das Filterwasser 30 in einen Schlammwassersammelbehälter 31 abfließt, in den auch das Filterwasser 30 aus den Filterkerzen 32 gelangt, von wo es drucklos ablaßbar ist.

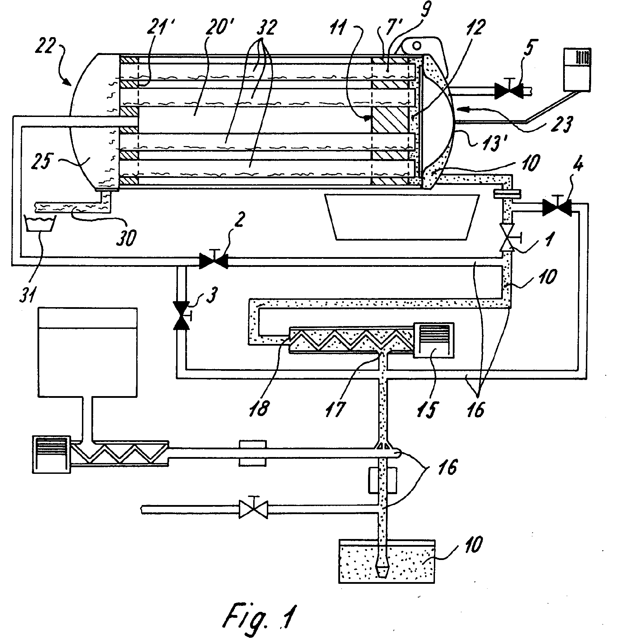

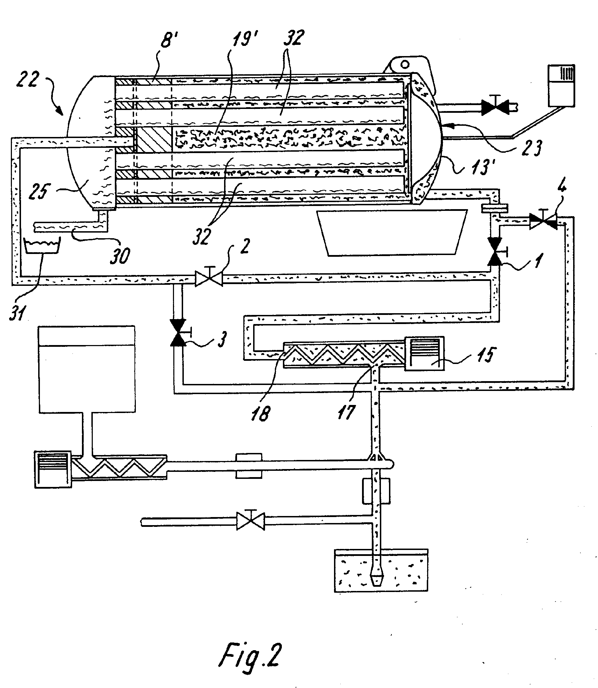

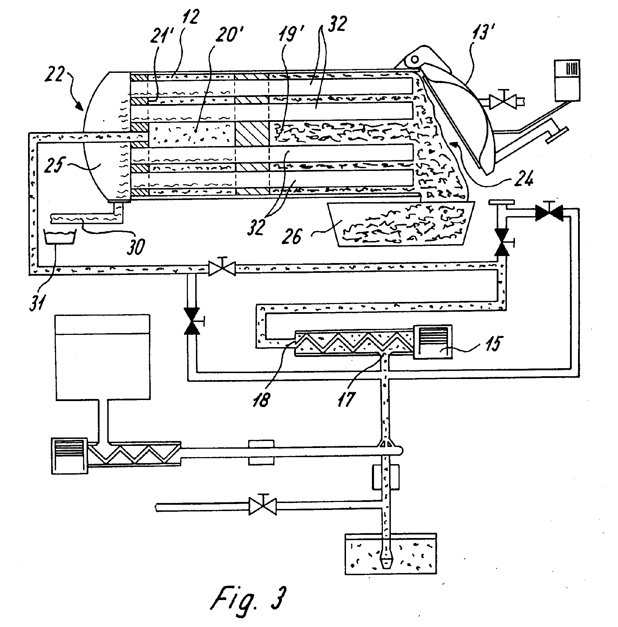

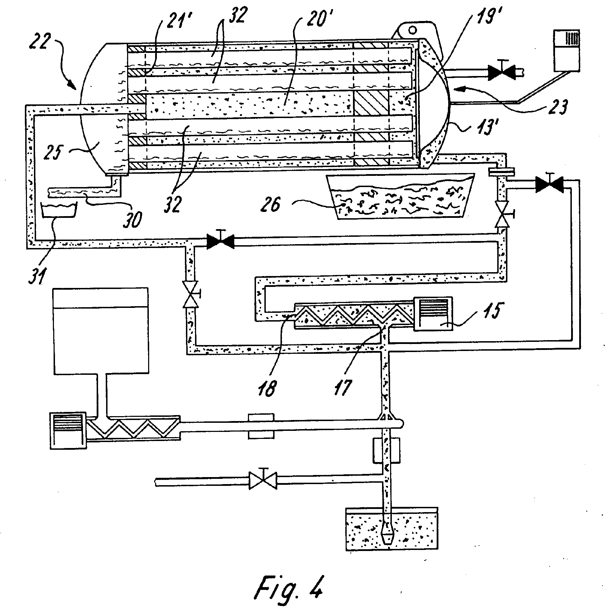

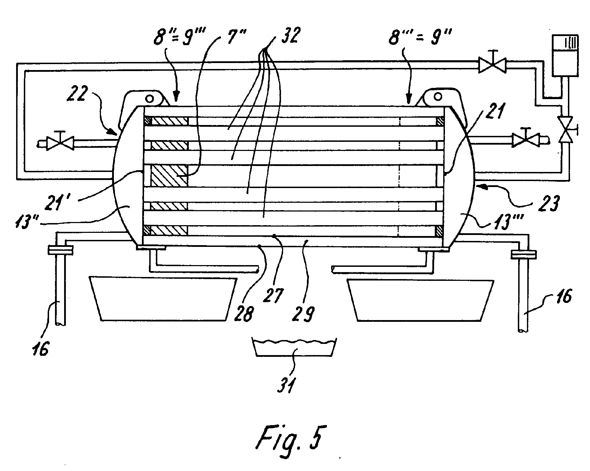

## Patentansprüche

1. Verfahren zur Druckentwässerung von wässrigen Rohschlämmen (10) unter Verwendung einer Vorrichtung mit einem Filterraum (19') für den Rohschlamm (10), die an mindestens einer Seite durch einen eine Entleerungsöffnung verschIießenden Deckel (13', 13'', 13''') begrenzt ist und in der sich in Längsrichtung erstreckende, über den Querschnitt verteilte Filterkerzen (32) angeordnet sind, auf denen ein den gesamten Querschnitt ausfüllender und an den Innenseiten der Kammer geführter, mit Durchsteckkanälen für die Filterkerzen ausgerüsteter Ausschubkolben (7', 7'' ) frei verschiebbar angeordnet ist, durch den im Zuge seiner Bewegung von einer Anschlagstellung (8', 8'', 8''') in eine Entleerungsstellung (9', 9'', 9''') bei geöffnetem Deckel (13', 13'', 13''') der entwässerte Schlamm ausgeschoben wird, **dadurch gekennzeichnet,** daß als Arbeitsmedium für den Ausschubkolben (7', 7'') auf seinem Weg von der Anschlagstellung (8', 8'', 8''') in die Entleerungsstellung (9', 9'', 9''') von einer Förderpumpe (15) unter Druck geförderter wässriger Rohschlamm (10) verwendet wird.

2. Verfahren nach Anspruch 1, dadurch gekennzeichnet, daß das Verfahren als Drei-Stufen-Verfahren durchgeführt wird, bei dem in der ersten Stufe von der Anschlagseite (11) her eingefüllter, den Ausschubkolben beaufschlagender Rohschlamm (10) den in einer Vorstufe oder einem vorangegangenen Arbeitszyklus im verschlossenen deckelseitigen Filterraum (19') entwässerten Schlamm nachentwässert und der Rohschlamm (10) dabei selbst vorentwässert wird und bei dem in der zweiten Stufe bei geöffnetem Deckel (13') während des Anschubhubes weiterer, von der Anschlagseite (11) her eingefüllter, das Antriebsmedium für den Ausschubkolben (7') bildende Rohschlamm (10) auf dem Weg des Ausschubkolbens (7') von der Anschlagstellung (8') in die Entleerungsstelle (9') weiter vorentwässert, und danach, in der dritten Stufe, der vorentwässerte Schlamm (12) bei geschlossenem Deckel (13) auf die andere Seite des Ausschubkolbens (7') umgepumpt, der Ausschubkolben (7') in die Anschlagstellung (8') zurückbewegt und der Schlamm unter einem Arbeitsdruck vollständig entwässert wird.

3. Verfahren nach Anspruch 2, dadurch gekennzeichnet, daß der Arbeitsdruck von bis zu 20 bar über eine vorbestimmte Zeit von ca. 15 Minuten aufrechterhalten wird.

4. Verfahren nach den Ansprüchen 2 und 3, dadurch gekennzeichnet, daß der Arbeitsdruck am Ende der ersten Stufe zur Öffnung des Deckels (13') heruntergefahren wird.

5. Verfahren nach einem der Ansprüche 2 - 4, dadurch gekennzeichnet, daß in einer Vorstufe der deckelseitige Filterraum (19') bei geöffnetem Ventil (1) mittels einer Förderpumpe (15) gefüllt, der Ausschubkolben (7') dabei in die Anschlagstellung (8') verfahren und der Rohschlamm (10) anschließend über die Haltezeit dem Arbeitsdruck ausgesetzt wird, und daß zur Einleitung der ersten Stufe das Ventil (1) geschlossen wird und in Umpumpleitungen angeordnete Ventile (2, 4) geöffnet werden, das Ventil (4) nur kurzzeitig, nichtentwässerte Rohschlammreste (10) aus dem Deckel (13') und den Förderleitungen (16) über die Saugseite (17) der Förderpumpe (15) abzupumpen und das Ventil (2), um den neuen Rohschlamm (10) auf die Anschlagseite (11) des Ausschubkolbens (7') pumpen zu können.

6. Verfahren nach einem der Ansprüche 2 - 5,
dadurch gekennzeichnet, daß in der ersten Stufe Rohschlamm (10) über das offene Ventil (2), die Ventile (1,3,4) sind geschlossen, sowie über die entsprechenden Förderleitungen (16) auf die Anschlagseite (11) des Ausschubkolbens (7') gelangt, und den in der Vorstufe oder einem vorausgegangenen Zyklus im deckelseitigen Filterraum entwässerten Schlamm nachentwässert, das in der zweiten Stufe bei weiterhin geöffnetem Ventil (2) und geschlossenen Ventilen (1,3,4), aber nach kurzzeitiger Druckabsenkung geöffnetem Deckel (13'), der Ausschubkolben in die Entleerungsstellung (9') verschoben wird und daß nach Beendigung des Ausschubvorganges und Verschließen des Deckels (13') sowie des Ventiles (2), zur Einleitung der dritten Stufe, der vorentwässerte Schlamm (12) über das geöffnete Ventil (3) von der Saugseite (17) der als Exzenterschneckenpumpe ausgeführten Förderpumpe (15) angesaugt und über deren Druckseite (18) über das geöffnete Ventil (1) in den deckelseitigen Filterraum (19') gedrückt wird, so daß der Ausschubkolben (7') den vorentwässerten Schlamm (12) aus dem anschlagseitigen Filterraum (20') austreibend, von diesem wieder in die Anschlagstellung (8') verschoben wird und daß nach der' Haltezeit zur Einleitung der ersten Stufe die nichtentwässerten Rohschlammreste (10) aus dem Deckel (13') und den Förderleitungen (16) bei geschlossenen Ventilen (1,3) über ein Ventil (4) der Saugseite (17) der Förderpumpe (15) zugeführt werden können, die diese Reste sowie neuen Rohschlamm (10) über das wiedergeöffnete Ventil (2) auf der Anschlagseite (11) des Ausschubkolbens (7') einspeist, wonach sich das Verfahren mit der ersten Stufe wiederholt.

7. Verfahren nach Anspruch 1, dadurch gekennzeichnet, daß in einem zylindrischen Filterraum der an beiden Stirnseiten (22,23) mit Deckeln (13'',13''') verschließbare Entleerungsöffnungen (24,25) aufweist zu denen benachbart Anschläge (21'',21''') für die Bewegungsbegrenzung des Ausschubkolbens (7'') vorgesehen sind, dieser bei jedem Hub einen Ausschubhub ausführt, dabei in eine Anschlagstellung (8'',8''')gefahren wird und in einer anschließenden Haltezeit der als Antriebsmedium eingesetzte und beim Ausschubvorgang vorentwässernde Rohschlamm (10) vollständig nachentwässert wird.

8. Verfahren nach Anspruch 7, dadurch gekennzeichnet, daß die beiden Deckel (13'',13''') zum abwechselnden Ausschieben des nachentwässerten Schlammes (26) wechselseitig geöffnet werden.

## Claims

1. A process for dehydrating aqueous raw sludges (10) by way of pressure using an apparatus having a filter chamber (19') for the raw sludge (10), which apparatus is delimited at least on one side by a cover (13', 13'', 13''') which closes a discharge opening and in which apparatus are arranged filter candles (32) extending longitudinally and distributed along the cross-section. on which an expulsion piston (7', 7'') is arranged in a freely displaceable manner which fills the entire cross-section, which is guided on the inward sides of the chamber and which is provided with through passages for the filter candles, by means of which piston the dehydrated sludge is expelled when the piston moves from an attack position (8', 8'', 8''') into a discharge position (9', 9'', 9''') with the cover (13', 13'', 13''') open, **characterised in** **that** aqueous raw sludge (10) conveyed under pressure by a conveyor pump (15) is used as the working medium for the expulsion piston (7', 7'') on its way from the attack position (8'. 8'', 8''') to the discharge position (9', 9'', 9''').

2. A process according to Claim 1, characterised in that the process is carried out as a three-stage-process , wherein in the first stage raw sludge (10) which is filled at the attack side (11) and which acts upon the expulsion piston subsequently dehydrates the sludge which has been dehydrated in a preliminary stage or in a previous working cycle in the filter chamber (19') with closed cover, and the raw sludge (10) itself undergoes preliminary dehydration, and wherein in the second stage with the cover (13') open, during the boost stroke for further raw sludge (10) which is filled from the attack side (11) and which forms the driving medium for the expulsion piston (7') along the path of the expulsion piston (7') from the attack position (8') into the discharge location (9') undergoes further preliminary dehydration, and then, in the third stage, the sludge (12) which has undergone preliminary dehydration, with the cover (13) closed, is pumped in circulatory manner onto the other side of the expulsion piston (7'), the expulsion piston (7') is moved back into the attack position (8') and the sludge is completely dehydrated at an operating pressure.

3. A process according to Claim 2, characterise in that the operating pressure of up to 20 bar is maintained for a predetermined period of time of ca. 15 minutes.

4. A process according to Claims 2 and 3, characterised in that the operating pressure is reduced at the end of the first stage to open the cover (13').

5. A process according to one of Claims 2 - 4, characterised in that in a preliminary stage the Filter chamber (19') on the side of the cover, with the valve (1) open, is filled by means of a conveyor pump (15), and when this happens the expulsion piston (7') is moved into the attack position (8') and the raw sludge (10) is then exposed to the operating pressure for the halting time, and that to initiate the first stage the valve (1) is closed and valves (2, 4) arranged in circulatory pumping conduits are opened, the valve (4) for just a short time. in order to pump nondehydrated raw sludge residues (10) from the cover (13') and the conveyance conduits (16) over the suction side (17) of the conveyor pump (15), and the valve (2) to be able to pump the new raw sludge (10) onto the attack side (11) of the expulsion piston (7').

6. A process according to one of Claims 2 - 5,
characterised in that in the first stage raw sludge (10) arrives, with the valve (2) open, the valves (1, 3, 4) closed. and also via the corresponding conveyance conduits (16), at the attack side (11) of the expulsion piston (7'), and subsequently dehydrates the sludge which has been dehydrated in the preliminary stage or in a preliminary cycle in the region of the cover of the filter chamber, that in the second stage, with the valve (2) still open and with the valves (1, 3, 4) closed, and with the cover (13') open after pressure has been reduced for a short period of time, the expulsion piston is displaced into the discharge position (9'), and that after the expulsion process is completed and after the cover (13') has been closed and also the valve (2), to initiate the third stage, the previously dehydrated sludge (12) is sucked, by means of the open valve (3), from the suction side (17) of the conveyor pump (15) designed in the form of an eccentric screw conveyor pump and is pushed at its pressurised side (18) with the valve (1) open into the filter chamber (19') on the cover side, so that the expulsion piston (7') which drives the sludge (12) which has been dehydrated beforehand from the filter chamber (20') on the attack side, is moved therefrom back into the attack position (8'), and after the halting time for initiation of the first stage the non-dehydrated raw sludge residues (10) are conveyed from the cover (13') and the conveyance conduits (16), with the valves (1, 3) closed, via a valve (4), on the suction side (17) of the conveyor pump (15) which feeds the residues and also new raw sludge (10) through the reopened valve (2) to the attack side (11) of the expulsion piston (7'), whereupon the process repeats itself with the first stage.

7. A method according to Claim 1. characterised in that attacking means (21'', 21''') are provided in a cylindrical filter chamber having discharge openings (24, 25) at either end (22, 23) which can be closed with covers (13'', 13'''), which attacking means (21'', 21''') are adjacent to the openings, and are provided for delimiting movement of the expulsion piston (7''), on each stroke movement the expulsion piston performs an expulsion stroke movement, in so doing is driven into an attack position (8'', 8''') and during a subsequent halting time the raw sludge (10) which is being used as the driving medium and which has undergone preliminary dehydration during the expulsion process is then completely dehydrated.

8. A process according to Claim 7. characterised in that the two covers (13'', 13''') are opened on alternate sides to alternatingly expel the sludge (26) dehydrated in a subsequent operation.

## Revendications

1. Procédé de déshydratation sous pression de boues aqueuses (10) utilisant un dispositif comportant un espace de filtrage (19') destiné aux boues brutes (10), limité, au moins d'un côté, par un couvercle (13', 13'', 13''') obturant une ouverture de vidange et dans lequel sont disposés des filtres en forme de chandelles (32) s'étendant en direction longitudinale et répartis à travers la section transversale, sur lequel un piston de refoulement (7', 7''), remplissant la totalité de la section transversale, disposé sur les faces intérieures de la chambre et présentant des canaux traversants pour les filtres en chandelles, peut coulisser librement, grâce auquel, lors de son déplacement d'une position de butée (8', 8'', 8''') dans une position de vidange (9', 9'', 9'''), le couvercle (13', 13'', 13''') étant ouvert, les boues déshydratées sont refoulées, caractérisé en ce que des boues brutes (10) aqueuses, mises sous pression par une pompe (15), sont utilisées comme fluide moteur pour le piston de refoulement (7', 7'') lors de son déplacement de la position de butée (8', 8'', 8''') dans la position de vidange (9', 9'', 9''').

2. Procédé selon la revendication 1, caractérisé en ce que le procédé se déroule en trois étapes, dans lequel, pour la première étape, des boues brutes (10) , aspirées par le côté de butée (11) et en contact avec le piston de refoulement, redéshydratent les boues déshydratées lors d'une étape préliminaire ou lors d'un cycle précédent, dans l'espace de filtrage (19') fermé situé du côté du couvercle, pré-déshydratant ainsi les boues brutes (10), et dans lequel, pour la deuxième étape, à l'état ouvert du couvercle (13'), au cours de la course de refoulement, d'autres boues brutes (10), introduites par le côté de butée (11), et formant le moyen d'entraînement du piston de refoulement (7'), continuent à être pré-déshydratées, lors du déplacement du piston de refoulement (7') de la position de butée (8') dans la position de vidange (9') et, ensuite, lors de la troisième étape, les boues (12) pré-déshydratées sont transvasées, à l'état fermé du couvercle (13), de l'autre côté du piston de refoulement (7'), le piston de refoulement (7') est ramené dans la position de butée (8') et les boues sont totalement déshydratées sous une pression de service.

3. Procédé selon la revendication 2, caractérisé en ce que la pression de service, s'élevant jusqu'à 20 bar, est maintenue pendant une période pouvant être prédéterminée d'environ 15 minutes.

4. Procédé selon les revendications 2 et 3, caractérisé en ce que, pour l'ouverture du couvercle (13'), la pression de service est réduite à la fin de la première étape.

5. Procédé selon l'une des revendications 2 à 4, caractérisé en ce que, lors d'une étape préliminaire, l'espace de filtrage (19') situé du côté du couvercle, à l'état ouvert de la vanne (1) est rempli au moyen d'une pompe (15), le piston de refoulement (7') est poussé en position de butée (8') et les boues brutes (10) sont, ensuite, soumises à la pression de service pendant un temps de maintien, et en ce que, pour débuter la première étape, la vanne (1) est fermée et les vannes (2, 4), disposées dans des conduites de dérivation, sont ouvertes, la vanne (4) n'étant ouverte que peu de temps, afin d'évacuer les restes de boues aqueuses (10) non-déshydratés hors du couvercle (13') et des conduites (16), par l'intermédiaire du côté aspiration (17) de la pompe (15), et afin de pouvoir pomper les nouvelles boues brutes (10) dans le côté de butée (11) du piston de refoulement (7').

6. Procédé selon l'une des revendications 2 à 5, caractérisé en ce que, lors de la première étape, à l'état fermé des vannes (1, 3, 4), des boues brutes (10) pénètrent par la vanne (2) ouverte ainsi que par les conduites (16) correspondantes, dans le côté de butée (11) du piston de refoulement (7'), et redéshydratent les boues brutes déshydratées lors de l'étape préliminaire ou au cours d'un autre cycle, dans l'espace de filtrage situé du côté du couvercle, en ce que, lors de la deuxième étape, la vanne (2) étant toujours ouverte et à l'état fermé des vannes (1, 3, 4), mais le couvercle (13') étant ouvert suite à une courte réduction de la pression, le piston de refoulement est déplacé en position de vidange (9'), et en ce que, à la fin du processus de refoulement et après fermeture du couvercle (13') et de la vanne (2), pour introduire la troisième étape, les boues (12) pré-déshydratées sont aspirées, par l'intermédiaire de la vanne (3) ouverte, par le côté aspiration (17) de la pompe (15) constituée en pompe à vis excentrique, et sont pressées, par son côté refoulement (18) et par l'intermédiaire de la vanne (1) ouverte, dans l'espace de filtrage (19') situé du côté du couvercle, de telle sorte que le piston de refoulement (7'), chassant les boues (12) pré-déshydratées hors de l'espace de filtrage (20') situé du côté de butée, est repoussé par celles-ci en position de butée (8') et qu'une fois écoulé le temps de maintien, pour introduire la première étape, les restes de boues brutes non-déshydratées peuvent être amenés, hors du couvercle (13') et des conduites (16), à l'état fermé des vannes (1, 3) et par l'intermédiaire d'une vanne (4), au côté aspiration (17) de la pompe (15), qui envoie ces restes, ainsi que des nouvelles boues brutes (10) , par l'intermédiaire de la vanne (2) réouverte, du côté de butée (11) du piston de refoulement (7'), le procédé se répétant ensuite avec la première étape.

7. Procédé selon la revendication 1, caractérisé en ce que, dans un espace de filtrage cylindrique, présentant, sur les deux faces frontales (22, 23) des ouvertures de vidange (24, 25) pouvant être obturées au moyen de couvercles (13'', 13'''), des butées (21'', 21''') adjacentes sont prévues pour limiter le déplacement du piston de refoulement (7''), qui effectue, à chaque mouvement, une course de refoulement et est ainsi amené dans une position de butée (8'', 8'''), les boues brutes (10), servant de fluide moteur et pré-déshydratées lors du processus de refoulement, étant totalement redéshydratées au cours d'un temps de maintien ultérieur.

8. Procédé selon la revendication 7, caractérisé en ce que, pour l'évacuation alternée des boues (26) redéshydratées, les deux couvercles (13'', 13''') sont ouverts à tour de rôle.
